# EUROPEAN PATENT SPECIFICATION

(11) **EP 3 599 106 B1**
(45) Date of publication and mention of the grant of the patent: **03.04.2024**
(21) Application number: 18185161.9
(22) Date of filing: 24.07.2018
(51) Int. Cl.: B60B 25/04, B60B 25/12, B60B 25/20

(54) **ASSEMBLY PROCESS OF A VEHICLE WHEEL**
VERFAHREN ZUR MONTAGE EINES FAHRZEUGRADES
PROCÉDÉ D'ASSEMBLAGE D'UNE ROUE DE VÉHICULE

(43) Date of publication of application: 29.01.2020
(73) Proprietor: Marc-Ingegno di Marchini Alberto & C. S.a.s., 13019 Varallo (Vercelli) (IT)
(72) Inventor: MARCHINI, Alberto, I-13019 VARALLO (Vercelli) (IT)
(74) Representative: Lunati & Mazzoni S.r.L.

(56) References cited:
- EP-A1- 0 465 564
- WO-A1-2017/159194
- US-A- 2 576 736
- US-A- 3 283 800
- US-A- 4 505 314

## Description

This invention concerns the assembly process of a vehicle wheel of the type specified in the preamble of the first claim and a wheel assembled according to a respective process.

A similar assembly process is disclosed in patent application US 4 505 314 A.

In particular, this invention concerns the assembly process of a tire on the wheel rim of a transport vehicle, such as in the automotive or aeronautical field.

As is commonly known, aeronautical vehicles are divided into many categories. These can be defined by structural characteristics and/or criteria such as maximum takeoff weight or maximum tip speed, which can also be used to designate a potential regulatory field for a vehicle.

Well-known examples of these are fixed wing aircraft, rotary wing aircraft, subsonic aircraft such as standard airliners, and supersonic aircraft such as military fighter aircraft.

In addition, some aircraft must comply with airworthiness regulations, which are linked to maintenance rules and minimum standards of reliability. These permit their use by a trained user.

Ultralight aircraft are among the various types of aircraft.

Mainly in Italy they are defined as aircraft that are exclusively intended for pleasure flying and have regulated weight limits that are lower than those used in general aviation.

Ultralight flying transport can be further divided into two-axis control and three-axis control categories. The three-axis category is further divided into autogyros, helicopters, and aircraft, while trikes fall into the two-axis category.

Motor gliders and autogyros, as well as some light aircraft, are mainly characterized by their different landing gear configurations.

The configurations are ideally grouped into two and three wheel configurations.

Each aircraft has a set of landing gear with one or more wheels that are aligned along an axis parallel to the pitch axis and perpendicular to the roll axis. Moreover, these landing gear are symmetrical with respect to the roll axis and are equally spaced one from the other. The three-wheel configuration entails the positioning of the third wheel along the roll axis in front of the center of gravity, i.e. at the nose; the two-wheel configuration entails the positioning of the third wheel along the roll axis but behind the center of gravity, specifically in the tail.

Each wheel of the aforementioned ultralight aircraft is then connected to the fuselage or to the body of the aircraft by means of a structure, which can be fixed, as in fixed landing gear, or a mobile structure, such as retractable landing gear. Moreover, inside the undercarriage there can be a form of suspension which helps to cushion the landing. This deformable element can simply be a spring system, an elastic device, or in more advanced cases, a hydraulic shock absorber.

The wheels, which are mounted so as to be able to turn freely, generally also have a mechanical or hydraulic braking system.

Ordinarily, these wheels consist of at least one solid rigid section, the rim, and an at least one partially deformable section that is normally made of rubber.

Wheels, in terms of aviation in general, must comply with regulations, as is true for any other aircraft component. These regulations are defined by entities such as the EASA [European Aviation Safety Agency] or the FAA [Federal Aviation Administration] for various aircraft categories.

Consequently, there are requirements involving minimum thresholds for fatigue resistance, impulsive loads, and similar in order to avoid the catastrophic failure of vital aircraft components.

However, with ultralight aircraft, regulatory oversight is limited, if not entirely lacking. However, all landing gear, and therefore also the wheels, of each type of aircraft are critical components as they are typically stressed by variable loads with a non-zero average, for example, during taxiing maneuvers.

Moreover, they are subject to extremely strong stress in landing, as is commonly known.

Aeronautical landing gear for ultralight aircraft includes rims consisting of a core divided into two parts on which, in general, there is an air chamber encased by a tubeless rubber tire.

The tires of aircraft are usually small in diameter and as a result the internal space is as well. Therefore, in order to aid with the assembly of the tire on the rim, it is usually divided into two parts that involve different solutions.

Regarding automotive or land transport in general, the solutions are substantially the same.

For example, some solutions where the rims are made up of more than one part are described in the following patent applications: US-A-2015183268, US-A-2005067079, and GB-A-1031411.

In detail, the aforementioned patent applications describe wheel rims consisting of two sections, which can be paired together to form one unit to facilitate the assembly and disassembly of inner tubes and tires.

The prior art described above has some significant drawbacks.

In the automotive or aeronautical field it often happens that you have to change a tire or have to make repairs.

As an example pertaining to the ultralight aircraft category, the use of the inner tube is problematic because it can be easily punctured on runways that, typically, are unpaved and may have imperfections.

In addition, the inflation valve undergoes stresses related to tire skidding, meaning that it can easily be torn.

The same applies to the tires used on road vehicles.

The tires covering inner tubes are essentially categorized according to the nominal diameter of the rim onto which they are fitted.

However, similar tires, i.e. having the same nominal diameter, may differ in some respects. For example, the dimensions of the beads supporting the rim, in this case the actual diameters or the thicknesses, can be different depending on the tires, which may also present slight imperfections.

For this reason, a further drawback stems from the fact that in cases where it is necessary, or desired, to change tire type, even within the same category, it is also necessary to change the rim and any elements correlated to it.

Another important disadvantage of the prior art is that standard rims do not allow for the rapid assembly and disassembly of the inner tubes and/or the covering tires.

In fact, the replacement of the tire is generally the prerogative of the tire specialist who, in order to fasten the rubber to the rim, must deform it at high pressure in order to achieve the correct positioning.

Furthermore, they must perform their work with specific equipment, and in the event of punctures, they must extract the bead from the rim.

A possible solution to the aforementioned issue could be the use of tubeless tires. However, they are not commonly used in the ultralight field.

Moreover, most rims that are present in the prior art do not allow for the use of tubeless tires as they do not guarantee proper adhesion of the support bead to the tire during inflation.

In fact, whether in the field of ultralight aircraft or automobiles, we make use of tires that were designed and normally used for other purposes, such as wheelbarrow tires, and infrequently are tires designed to be tubeless.

In conclusion, as a consequence of what has been previously expressed, the prior art has the disadvantage of forcing the user to use the same type of tire or face higher costs. Examples of this include rim change costs, disadvantages when choosing tires, or having to add the cost of the inner tube to the tire.

In this situation the technical task underlying this invention is to devise a method for mounting a vehicle wheel capable of substantially alleviating at least some of the cited drawbacks.

Within the scope of this technical task, an important goal of the invention is to attain a process for mounting a vehicle wheel that allows the user to mount a range of tire types that are within the same category onto a rim, i.e. tires with the same nominal diameter.

Another important goal of the invention is to realize an assembly method for vehicle wheel rims, which allows for a simple and rapid assembly and/or disassembly of the tire on the rim.

Furthermore, another goal of the invention is to provide a method for assembling a wheel which includes a rim suited to fastening and securing any type of tire, whether with inner tube or tubeless.

Finally, a further objective of the invention is to provide a rim which is advantageous from a financial standpoint.

A vehicle wheel assembly process as claimed in annexed Claim 1 achieves the technical task and the objectives specified. Preferred examples are described in the dependent claims.

The features and advantages of the invention are clarified below with a detailed description of the preferred functions of the invention, with reference to the attached drawings, in which:

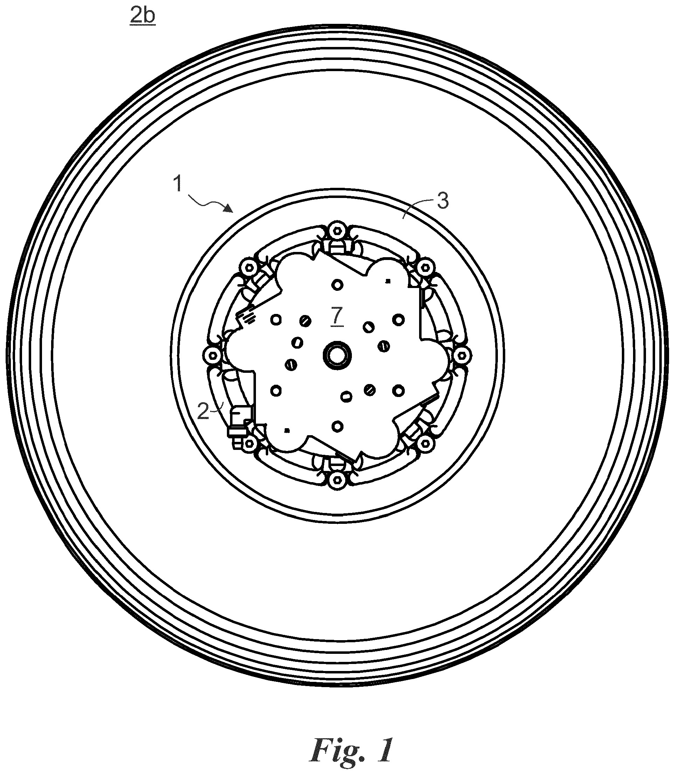

**Fig. 1** shows a wheel comprising the rim according to the invention;

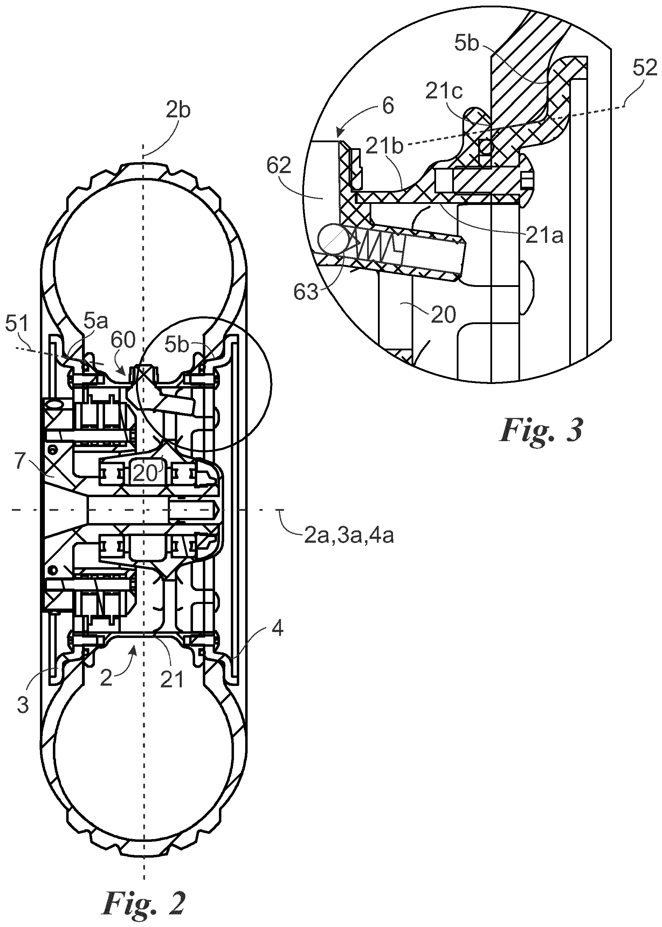

**Fig. 2** shows a cross-section of a wheel comprising the rim according to the invention;
**Fig. 3** is a detail of the coupling between the rim and the bead of a tire; and

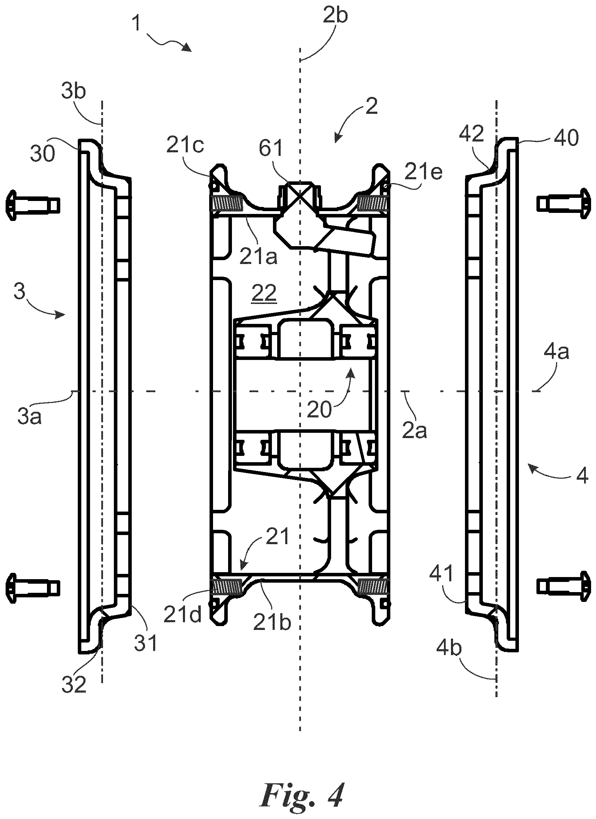

**Fig. 4** shows a blow-up of the cross-section of the rim of the invention but without a braking device.

In this document, measurements, values, shapes and geometric references (such as perpendicularity and parallelism), when associated with words such as "circa" or other similar terms such as "almost" or "substantially," are to be understood to a lesser extent as measurement errors or inaccuracies due to production and/or manufacturing errors and, above all, less as a slight divergence from the value, measurement, geometric shape or reference to which it is associated. For example, these terms, if associated with a value, ideally indicate a divergence of no more than 10% of the value.

Moreover, when used, terms such as "first", "second", "higher/upper", "lower", "primary" and "secondary" do not necessarily identify an order, a relationship priority or relative position, but can simply be used to more clearly distinguish between their different components.

The measurements and data reported in this text are to be considered, unless otherwise indicated, as performed in ICAO [International Civil Aviation Organization] International Standard Atmosphere (ISO 2533 [International Organization for Standardization]).

With reference to the Figures, the rim for a vehicle with the invention is indicated throughout by the number **1.**

Rim 1 is ideally suited for use in ultralight aircraft such as, for example, autogyros with two-wheel and three-wheel landing gear.

Rim 1 is, however, also suitable for use in automobiles and on road vehicles in general.

Preferably, rim 1 comprises the first section **2,** the second section **3** and the third section **4.**

Sections 2, 3, and 4 may be made of metal or a composite material, ideally in an aluminum alloy, with a preference for 7000 alloy, and a greater preference still for 7075 alloy (Ergal).

The first section 2 defines a rotation axis **2a** and a central structure **2b** perpendicular to the rotation axis 2a and preferably consists of a single part, for example, similar to that found in ordinary cars.

The first section 2, therefore, is substantially ring-shaped and comprises a coupling part **20** and a supporting part **21.**

Support part 21 is, for example, constituted by a ring structure centered with respect to the rotation axis 2a and defining an inner surface **21a,** an external surface **21b** and two support crowns **21c.**

In particular, inner surface 21a is the surface of the ring facing rotation axis 2a, while the outer surface 21b is the surface of the first section 2 facing outwards and opposite, that is to say, to the inner surface 21a.

Outer surface 21b preferably comprises at least one protuberance, more suitably two, defining a substantially concave surface that is suitable for housing, for example, an inner tube.

Preferably the two protuberances 21c are symmetrical with respect to the central plane 2b and can hold in position a possible inner tube with respect to central plane 2b.

Additionally, inner surface 21a preferably includes an auxiliary structure **6.** Auxiliary structure 6 comprises, in the preferred configuration, a mechanism **61** placed between inner surface 21a and outer surface 21b.

Mechanism 61 preferably forms a channel **62** and includes a valve **63.**

Channel 62 is preferably a fluid passage connection between inner surface 21a and outer surface 21b.

Moreover, valve 63 is a valve that is suitable for opening and closing channel 62. The valve may differ in type, as for example, it may be a non-return valve, or control valve, or similar, and it is a valve known in prior art.

Auxiliary structure 6 can, in an alternative configuration, consist of a hole **60** passing between inner surface 21a and outer surface 21b.

Hole 60 can, for example, be adapted to house the valve of an inner tube internally, in such a way that the inner tube remains affixed to outer surface 21b while fluid passes through the external elements.

The two support crowns 21c are, instead, preferably aligned with respect to axis of rotation 2a and symmetrical with respect to central plane 2b.

In particular, support crowns 21c define a surface parallel to central plane 2b. These support crowns 21c define a maximum diameter and a minimum diameter and can include a fastening means on their surface **21d.**

Said fastening means 21d may, for example, consist of threading holes and can be secured in place with screws or other commonly available elements.

In addition, support crowns 21c preferably comprise circular guides **21e.**

These circular guides 21e are preferably housed within seals, such as an O-ring seal.

Fastening part 20 consists of a crown centered along the axis of rotation 2a and secured in place with respect to inner surface 21a.

In particular, fastening part 20 can be secured to inner surface 21a in such a way as to define a surface parallel to central plane 2b, or this surface can be directly aligned with central plane 2b.

Coupling part 20, therefore, divides the structure underpinned by support part 21 into two regions. Therefore, the first section 2 defines at least one volume **22.** This volume 22 is defined by fastening part 21 and at least part of support part 21 and, therefore, corresponds to at least one of the aforementioned regions of space.

Fastening part 20 can, therefore, have variable dimensions, both in terms of maximum diameter and minimum diameter defining the hole.

Preferably, fastening part 20 is employed in such a way that it can still move while secured to the outer hub of rim 1.

Preferably, the hub is an element of the landing gear on an aircraft onto which rim 1 is mounted, and by extension the wheel.

This hub may be a simple shaft, or a support, and may have any other mechanical or electrical parts suitable for interacting with the wheel.

Fastening part 20 may, therefore, be constituted by a hollow disk, or a radial spoked structure that is commonly available on the rim market today.

Furthermore, it may also include a braking device **7.**

Braking device 7 is, for example, capable of stopping, thanks to the friction produced by the motion of rim 1 when it is in use.

Braking device 7 is, therefore, suited to being partially secured to an external support.

The external support, as mentioned, may consist of the landing gear, or another support structure, and/or prior art damping elements.

Braking device 7 can, therefore, be either a disc brake, including a brake caliper, or a widely known multi-disc aeronautical brake that is commonly used in civil aviation. It may further comprise a radial piston system employed to slow down and stop rim 1 from moving around the rotation axis 2a with friction.

More specifically, braking device 7 is preferably a form of fixed disc brake with a classic caliper, a floating disc brake with a classic caliper, a single-ring annular disc brake with radial pistons, or a multi-rotor annular disc brake with radial pistons, all of which are commonly used in aircraft.

Finally, braking device 7 is preferably included inside one of the spaces 22 defined by first section 2.

This characteristic can, for example, provide aerodynamic advantages to rim 1, since braking device 7 does not interfere with the aerodynamics of the aircraft. The second section 3 defines a second axis **3a** and a second stage **3b** perpendicular to the second axis 3a.

The third section 4 also defines a third axis **4a** and a third stage **4b** perpendicular to the third axis 4a.

The second and third sections 3 and 4 are each ideally formed with a ring structure with sections parallel to planes 3b, 4b respectively, and varying in diameter respectively along the second and third axes 3a, 4a.

In summary, sections 3, 4 may be approximately the same shape, for example, a hollow conical trunk or other more complex geometrical figures which vary in the size of their diameters.

The second and third sections 3, 4 form the first crown **30**, **40**, a second crown **31**, **41** and a support belt **32**, **42** respectively.

The first crown 30, 40 forms a surface perpendicular to the second and third axes 3a, 4a and parallel to the second and third planes 3b, 4b.

The second crown 31, 41 should also form a surface perpendicular to the second and third axes 3a, 4a and parallel to the second and third planes 3b, 4b and, consequently, the second crown 31, 41 should be parallel to the first crown 30, 40. In addition, the second crown 31, 41 in is smaller in diameter than the first crown 30, 40.

The second crowns 31, 41, therefore, form a ring - the internal ring corresponding to the minimum diameter and the external ring corresponding to the maximum diameter.

The external diameter of the second crowns 31, 41 should be smaller than the maximum diameter of the support crowns 21c.

The inner diameter of the second crowns 31, 41 and the minimum diameter of the support crowns 21c should ideally coincide.

Moreover, the second crowns 31, 41 are designed to be secured to support crowns 21c.

Accordingly, they may have holes for screws needed to secure 21d, which are located around support crowns 21c.

Sections 2, 3, 4 form an operative configuration in which the first and second sections 2, 3 and the first and third sections 2, 4 are fastened and the axes 2a, 3a, 4a are aligned one to another.

Sections 3, 4 should ideally be fastened to the first section 2 so as to be consistently arranged with respect to central plane 2b, in an operational configuration. Therefore, the second and third stages 3b, 4b are parallel to central plane 2b.

Moreover, the second and third sections 3, 4, when arranged in an operational configuration should preferably have the same dimensions.

Support belts 32, 42 should preferably form at least some of the support crowns 21c of profiles **5a**, **5b.**

Said profiles 5a and 5b are, in detail, are defined as starting from the first ring 30, 40, by support belt 51, 52 and form a shape that is indicatively and substantially counter-fitted with respect to the tire beads.

Profiles 5a and 5b are, consequently, suitable for housing the tire beads.

In detail, support belt 32, 42 forms a bearing plane **51**, **52.**

This bearing plane 51, 52 is preferably the plane along which the lower section of the tire bead is placed.

Preferably, bearing plane 51, 52 forms an angle with the plane 3b, 4b **α** less than 30°.

Bearing plane 51, 52 makes it possible to prevent the tire from overlapping rim 1 and, therefore, makes it possible to use different types of tires.

In fact, you can choose from a wide range of tires, and in this case the wheel is provided with an additional inner tube, or a tubeless tire.

Preferably, a wheel can therefore comprise a rim 1 and a regular or tubeless tire.

In particular, since the rear sections of 3 and 4 are constructed so that planes 51 and 52 and 4b and 3b exactly match the shape of the tire being used, rim 1 allows us to use any tire of the tubeless type, ensuring a proper seal even without the use of an inner tube.

A rim kit 1 can also be provided comprising the first section 2 and a range of second and third sections 3, 4 in which each second and third section 3, 4 defines the distance between the first crown 30, 40 and the second crown 31, 41 along the axis 3a, 4a, which will differ between different second and third sections 3, 4.

In particular, preferably the kit should be designed to adapt rim 1 with tires of the same category, i.e. with the same nominal diameter, but with beads of different thickness.

The functioning of rim 1 that was described above in structural terms is as follows. A user can select different types of tires within the same category while maintaining the functionalities of rim 1.

In fact, the different second and third sections allow people to obtain rims with profiles 5a, 5b of a different extension.

Moreover, the shape of rim 1 allows the tire to be adapted onto section 1 both simply and rapidly. Once the tire is positioned with or without the inner tube, it is possible to secure it in place by mounting the second and third sections 3, 4 for the specific size.

The invention involves a new assembly process of a vehicle wheel comprising a tire defining two beads and rim 1. Preferably, the process comprises said rim kit 1.

In particular, it comprises a first step in which the thickness of a tire bead is evaluated for it to be operatively secured to rim 1. The second step comprises the second and third sections 3, 4 being selected in such a way that the distance between the first crown 30, 40 and the second crown 31, 41 is compatible with the thickness. The third step comprises the tire being positioned on the first section 2 and the final step in which the second and third sections 3, 4 are secured to the first section 2 so as to fasten the tire beads to profiles 5a, 5b.

The first step can easily be undertaken with a caliper or any prior art length-measuring instrument.

The selection of the second and third sections 3, 4 is carried out considering compatibility parameters, for example, ones expressed on designated cards provided to the user with the wheel rim. The referenced thicknesses of the sections 3, 4 may be provided depending upon the thickness of the tire bead to be mounted and the relative tolerances.

The assembly process of a vehicle wheel, including a tire and vehicle rim 1, as set out by the invention, delivers many significant advantages.

In fact, the process includes a rim 1, which allows for the use of tires belonging to the same category, i.e. having the same nominal diameter, but of different types.

In fact, it is possible to fit tires with or without inner tubes on rim 1.

An important advantage of the invention is, in fact, that tires with inner tubes can be fitted to rim 1 and act as tubeless tires.

In detail, profiles 5a, 5b make it possible to lock the tire beads into the grooves and ensure the correct positioning between the rubber and the rim, thereby creating a working seal and ensuring that the wheel is fully and safely operational on the vehicle.

The ability to use any type of tubeless tire reduces any risks that may have arisen from the use of tires with inner tubes. In fact, the inner tubes that are in use in ultralight aircraft are not designed to be used on aircraft at all.

In the event of a puncture from debris or thorns, for example, the inner tube would soon stop functioning properly. Moreover, if the tire starts to slip on the rim, the inner tube may rupture and compromise the inflation valve.

These drawbacks can be avoided by using tubeless tires, which, even in the case of debris or punctures, ensure a longer life than the common configurations with an inner tube and tire.

Another notable advantage of the invention is that assembly of the tires is considerably easier. In fact, it is not necessary to manually take a collar apart, as the tire can be fitted directly to the first section, and then the tire beads located between the second and the first section and the third and the first section may be secured with common tools, such as screwdrivers.

This mounting method has the further advantage of allowing the assembly of tires with minor defects such as burrs or diameters different from the nominal one as long as it is within the tolerance limits.

As a consequence of what has been stated above, additional advantages guaranteed by the invention emerge. Rim 1 means that any tire changes are considerably less costly and any type of tire can be used. Costs related to inner tubes are eliminated and, moreover, quite impressively in the aeronautical field, the weight and space taken up by inner tubes and spares in the undercarriage are greatly reduced.

In this manner, any vehicle fitted with landing gear rims according to the invention derives benefits in terms of features and enhanced performance.

Performance is further boosted by the fact that the braking device is entirely integrated within the volume defined by the wheel rim and, therefore, does not interfere with the aerodynamics of the aircraft.

It is possible to install a braking device on the fastening part of the first section of any tire type, thereby allowing the wheel axle to be integrated with the brake body so as to further lighten the weight of the rim.

The invention is amenable to variations falling within the scope of the inventive concept that is defined in the claims.

## Claims

1. Assembly process of a vehicle wheel comprising a tire consisting of two tire beads and a rim (1),
- said wheel rim (1) for a vehicle, including:
- a first section (2) consisting of a rotation axis (2a) and a central plane (2b) perpendicular to said rotation axis (2a),
- a second section (3) consisting of a second axis (3a) and a second plane (3b) perpendicular to said second axis (3a),
- a third section (4) defining a third axis (4a) and a third plane (4b) perpendicular to said third axis (4a),
- said first section (2) is essentially ring-shaped and comprises a coupling part (20) and a supporting part (21),
- said support part (21) should consist of a ring structure centred on said rotation axis (2a) forming an inner surface (21a), an outer surface (21b) and two support crowns (21c) centred with respect to said axis of rotation (2a) and mutually arranged symmetrically with respect to the central plane (2b),
- said fastening part (20) consists of a crown centered along said rotation axis (2a), secured to said internal surface (21a) and capable of movement while secured to the external part of the wheel rim (1),
- said second and third sections (3, 4) each forming a ring structure with sections parallel, respectively, to the central planes (3b, 4b) variants in diameter along the second and third axes (3a, 4a),
- said second and third sections (3, 4) defining at their axial ends, respectively, a first crown (30, 40) and a second crown (31, 41) which has a smaller diameter than the first crown (30, 40), and a support belt (32, 42),
- said second crowns (31, 41) have an outer diameter that is smaller than the maximum diameter of the support crowns (21c) and designed to be removably secured to the support crowns (21c),
- said sections (2, 3, 4) defining an operative configuration in which said first and second sections (2, 3) and said first and third sections (2, 4) are mutually secured and said axes (2a, 3a, 4a) are mutually aligned,
- said support belts (32, 42) determine with at least part of said support crowns (21c), the profiles (5a, 5b) each of which is counter-shaped to the tire beads and said tire is designed to house the beads,
and said method **characterized by the fact** that it comprises:
- a first step in which the thickness of said tire bead is evaluated to ensure that it is operationally compatible with the rim (1),
- a second step in which said second and third sections (3, 4) are selected so that said distance between the first crown (30, 40) and the second crown (31, 41) is compatible with said thickness,
- a third step in which said tire is placed into the first section (2),
- a fourth step in which said second and third sections (3, 4) are connected to the first section (2) so as to secure each of the tire beads to their respective profile (5a, 5b).

2. Process according to claim 1, in which said support belt (32, 42) forms a bearing plane (51, 52) defining together with said plane (3b, 4b) an angle (α) of less than 30 degrees.

3. Process according to at least one preceding claim, wherein said internal surface (21a) comprises at least one auxiliary structure (6) defining at least one element chosen from a hole (60) and a device (61) between said inner surface (21a) and said outer surface (21b), with said device (61) forming and including a valve (63), said channel (62) being a fluid passage connection a channel (62) between said inner surface (21a) and said external surface (21b) and said valve (63) being designed to open and close said channel (62).

4. Process according to at least one previous claim, wherein said fastening part (20) comprises a braking device (7) designed to be at least partially secured to an external support.

5. Process according to at least one preceding claim, wherein said first section (2) defines at least one volume (22) delimited by said fastening part (20) to at least part of the support part (21) and the braking device (7) is included within said volume (22).

6. Process according to at least one previous claim, wherein said braking device (7) is a choice between a fixed disc brake with a classic caliper, a floating disc brake with a classic caliper, a single-ring annular disc brake with radial pistons, or a multi-rotor annular disc brake with radial pistons of the type used in aeronautics.

7. Process according to at least one previous claim for an aeronautical vessel of the ultralight aircraft category.

8. Process according to at least one preceding claim, comprising said first section (2) and several pairs of second and third sections (3, 4) in which each second and third section (3, 4) defines the distance between the first crown (30, 40) and the second crown (31, 41) along the axis (3a, 4a) and different with respect to the other pairs of second and third sections (3, 4).

9. Wheel created by using any one of the process according to the above claims.

## Patentansprüche

1. Montageverfahren eines Fahrzeugsrades, umfassend einen Reifen, der aus zwei Reifenwülsten und einer Felge (1) besteht,
- die Radfelge (1) für ein Fahrzeug umfassend,
- einen ersten Abschnitt (2), bestehend aus einer Drehachse (2a) und einer Mittelebene (2b), die senkrecht zu der Drehachse (2a) steht,
- einen zweiten Abschnitt (3), bestehend aus einer zweiten Achse (3a) und einer zweiten Ebene (3b), die senkrecht zu der zweiten Achse (3a) steht,
- einen dritten Abschnitt (4), der eine dritte Achse (4a) und eine dritte Ebene (4b) definiert, die senkrecht zu der dritter Achse (4a) steht,
- der erster Abschnitt (2) ist im Wesentlichen ringförmig und umfasst ein Kupplungsteil (20) und ein Stützteil (21),
- das Stützteil (21) soll aus einer Ringstruktur bestehen, die auf der Drehachse (2a) zentriert ist und eine Innenfläche (21a), eine Außenfläche (21b) und zwei Stützradkränze (21c) bildet, die in Bezug auf der Drehachse (2a) zentriert sind und gegenseitig symmetrisch zur Mittelebene (2b) angeordnet sind,
- das Befestigungsteil (20) besteht aus einem Radkranz, der entlang der Drehachse (2a) zentriert ist, an der Innenfläche (21a) befestigt ist und der in der Lage ist, sich zu bewegen, während er am äußeren Teil der Radfelge (1) befestigt ist,
- der zweite Abschnitt und der dritte Abschnitt (3, 4) bilden jeweils eine Ringstruktur mit Abschnitten, die parallel zu den Mittelebenen (3b, 4b) sind, wobei der Durchmesser entlang der zweiten Achse und der dritten Achse (3a, 4a) variiert,
- der zweite Abschnitt und der dritte Abschnitt (3, 4) definieren an ihren axialen Enden jeweils einen ersten Radkranz (30, 40) und
- einen zweiten Radkranz (31, 41), der einen kleineren Durchmesser als der erste Radkranz (30, 40) aufweist, und ein Stützgürtel (32, 42),
- die zweiten Radkränze (31, 41) haben einen Außendurchmesser, der kleiner als der maximale Durchmesser der Stützradkränze (21c) ist und sind so ausgestaltet, dass sie abnehmbar an den Stützradkränzen (21c) befestigt werden können, wobei die Abschnitte (2, 3, 4) eine Betriebskonfiguration definieren, in der der erste Abschnitt und der zweite Abschnitt (2, 3) und der erste Abschnitt und der dritte Abschnitt (2, 4) gegenseitig befestigt sind und die Achsen (2a, 3a, 4a) gegenseitig ausgerichtet sind,
- die Stützgürtel (32, 42) bestimmen mit zumindest einem Teil der Stützradkränze (21c) die Profile (5a, 5b), von denen jedes gegenüber den Reifenwülsten gebildet ist und der Reifen ist so ausgestaltet, dass er die Wülste aufnimmt,
und das Verfahren **ist dadurch gekennzeichnet, dass** es umfasst:
- einen ersten Schritt, wobei die Dicke des Reifenwulstes gemessen wird, um sicherzustellen, dass sie operativ mit der Felge (1) kompatibel ist,
- einen zweiten Schritt, wobei der zweite Aabschnitt und der dritte Abschnitt (3, 4) ausgewählt werden, so dass der Abstand zwischen dem ersten Radkranz (30, 40) und dem zweiten Radkranz (31, 41) mit der Dicke kompatibel ist,
- einen dritten Schritt, wobei der Reifen in den ersten Abschnitt (2) eingelegt wird,
- einen vierten Schritt, wobei der zweite Abschnitt und der dritte Abschnitte (3, 4) mit dem ersten Abschnitt (2) verbunden werden, um jeden der Reifenwülste an ihrem jeweiligen Profil (5a, 5b) zu befestigen.

2. Verfahren nach Anspruch 1, wobei der Stützgürtel (32, 42) eine Trägerebene (51, 52) bildet, die zusammen mit der Ebene (3b, 4b) einen Winkel (a) von weniger als 30 Grad definiert.

3. Verfahren nach mindestens einem vorhergehenden Anspruch, wobei die Innenfläche (21a) mindestens eine Hilfsstruktur (6) umfasst, die mindestens ein Element definiert, das aus einer Öffnung (60) und einer Vorrichtung (61) zwischen der Innenfläche (21a) und der Außenfläche (21b) ausgewählt ist, mit der Vorrichtung (61), die ein Ventil (63) bildet und enthält, wobei das Kanal (62) ist ein Flüssigkeitsdurchgang, der einen Kanal (62) zwischen der Innenfläche (21a) und der Außenfläche (21b) verbindet und wobei das Ventil (63) eingerichtet ist, den Kanal (62) zu öffnen und zu schließen.

4. Verfahren nach mindestens einem vorhergehenden Anspruch, wobei das Befestigungsteil (20) eine Bremsvorrichtung (7) umfasst, die so ausgestaltet ist, dass sie zumindest teilweise an einer externen Stütze befestigt wird.

5. Verfahren nach mindestens einem vorhergehenden Anspruch, wobei der erste Abschnitt (2) mindestens ein Volumen (22) definiert, das durch das Befestigungsteil (20) bis zu zumindest einem Teil des Stützteils (21) begrenzt ist und die Bremsvorrichtung (7) innerhalb des Volumens (22) enthalten ist.

6. Verfahren nach mindestens einem vorhergehenden Anspruch, wobei die Bremsvorrichtung (7) eine Auswahl unter einer festen Scheibenbremse mit einem üblichen Bremssattel, einer schwimmenden Scheibenbremse mit einem üblichen Bremssattel, einer Einzelring-ringförmigen Scheibenbremse mit radialen Kolben oder einer Mehrrotor-ringförmigen Scheibenbremse mit radialen Kolben des Typs, der im Flugwesen verwendet wird.

7. Verfahren nach mindestens einem vorhergehenden Anspruch für ein Luftfahrzeug der Kategorie Ultraleichtflugzeuge.

8. Verfahren nach mindestens einem vorhergehenden Anspruch, umfassend den ersten Abschnitt (2) und mehrere Paare von zweiten und dritten Abschnitten (3, 4), wobei jeder zweite Abschnitte und dritte Abschnitt (3, 4) den Abstand zwischen dem ersten Radkranz (30, 40) und dem zweiten Radkranz (31, 41) entlang der Achse (3a, 4a) definiert und unterschiedlich zu den anderen Paaren von zweiten und dritten Abschnitten (3, 4) sind.

9. Rad, das unter Verwendung eines der Verfahren nach den obigen Ansprüchen hergestellt wurde.

## Revendications

1. Procédé d'assemblage d'une roue de véhicule comprenant un pneu constitué de deux talons de pneu et une jante (1),
- ladite jante de roue (1) pour un véhicule, comprenant :
- une première section (2) composée d'un axe de rotation (2a) et d'un plan central (2b) perpendiculaire audit axe de rotation (2a),
- une deuxième section (3) composée d'un deuxième axe (3a) et d'un deuxième plan (3b) perpendiculaire audit deuxième axe (3a),
- une troisième section (4) définissant un troisième axe (4a) et un troisième plan (4b) perpendiculaire audit troisième axe (4a),
- ladite première section (2) est essentiellement annulaire et comprend une partie d'accouplement (20) et une partie de support (21),
- ladite partie de support (21) devrait consister en une structure annulaire centrée sur ledit axe de rotation (2a) formant une surface interne (21a), une surface externe (21b) et deux couronnes de support (21c) centrées par rapport audit axe de rotation (2a) et disposées mutuellement de manière symétrique par rapport au plan central (2b),
- ladite partie de fixation (20) consiste en une couronne centrée le long dudit axe de rotation (2a), fixée à ladite surface interne (21a) et capable de se déplacer tout en étant fixée à la partie externe de la jante de roue (1),
- lesdites deuxième et troisième sections (3, 4) formant chacune une structure annulaire avec des sections parallèles, respectivement, aux plans centraux (3b, 4b) dont le diamètre varie le long des deuxième et troisième axes (3a, 4a),
- lesdites deuxième et troisième sections (3, 4) définissant à leurs extrémités axiales, respectivement, une première couronne (30, 40) et une deuxième couronne (31, 41) qui a un diamètre plus petit que la première couronne (30, 40), et une ceinture de support (32, 42),
- lesdites deuxième couronnes (31, 41) ont un diamètre extérieur plus petit que le diamètre maximal des couronnes de support (21c) et sont conçues pour être fixées de manière amovible aux couronnes de support (21c),
- lesdites sections (2, 3, 4) définissant une configuration opérationnelle dans laquelle lesdites première et deuxième sections (2, 3) et lesdites première et troisième sections (2, 4) sont mutuellement sécurisées et lesdits axes (2a, 3a, 4a) sont mutuellement alignés,
- lesdites ceintures de support (32, 42) déterminent avec au moins une partie desdites couronnes de support (21c), les profils (5a, 5b) chacun desquels est en contreforme par rapport aux talons du pneu et ledit pneu est conçu pour loger les talons,
et ledit procédé étant **caractérisé par le fait qu'**il comprend :
- une première étape dans laquelle l'épaisseur dudit talon de pneu est évaluée pour assurer qu'elle est opérationnellement compatible avec la jante (1),
- une deuxième étape dans laquelle lesdites deuxième et troisième sections (3, 4) sont sélectionnées de sorte que ladite distance entre la première couronne (30, 40) et la deuxième couronne (31, 41) soit compatible avec ladite épaisseur,
- une troisième étape dans laquelle ledit pneu est placé dans la première section (2),
- une quatrième étape dans laquelle lesdites deuxième et troisième sections (3, 4) sont connectées à la première section (2) afin de sécuriser chacun des talons du pneu à leur profil respectif (5a, 5b).

2. Procédé selon la revendication 1, dans lequel ladite ceinture de support (32, 42) forme un plan de support (51, 52) définissant conjointement avec ledit plan (3b, 4b) un angle (a) de moins de 30 degrés.

3. Procédé selon au moins une revendication précédente, dans lequel ladite surface interne (21a) comprend au moins une structure auxiliaire (6) définissant au moins un élément choisi parmi un trou (60) et un dispositif (61) entre ladite surface interne (21a) et ladite surface externe (21b), ledit dispositif (61) formant et incluant une valve (63), ledit canal (62) étant un canal de connexion de passage de fluide (62) entre ladite surface interne (21a) et ladite surface externe (21b) et ladite valve (63) étant conçue pour ouvrir et fermer ledit canal (62).

4. Procédé selon au moins une revendication précédente, dans lequel ladite partie de fixation (20) comprend un dispositif de freinage (7) conçu pour être au moins partiellement fixé à un support externe.

5. Procédé selon au moins une revendication précédente, dans lequel ladite première section (2) définit au moins un volume (22) délimité par ladite partie de fixation (20) jusqu'à au moins une partie de la partie de support (21) et le dispositif de freinage (7) est inclus dans ledit volume (22).

6. Procédé selon au moins une revendication précédente, dans lequel ledit dispositif de freinage (7) est un choix entre un frein à disque fixe avec un étrier classique, un frein à disque flottant avec un étrier classique, un frein à disque annulaire à anneau unique avec des pistons radiaux, ou un frein à disque annulaire multi-rotor avec des pistons radiaux du type utilisé en aéronautique.

7. Procédé selon au moins une revendication précédente pour un véhicule aéronautique de la catégorie des aéronefs ultralégers.

8. Procédé selon au moins une revendication précédente, comprenant ladite première section (2) et plusieurs paires de deuxième et troisième sections (3, 4) dans lesquelles chaque deuxième et troisième section (3, 4) définit la distance entre la première couronne (30, 40) et la deuxième couronne (31, 41) le long de l'axe (3a, 4a) et différente par rapport aux autres paires de deuxième et troisième sections (3, 4).

9. Roue créée en utilisant l'un quelconque des procédés selon les revendications ci-dessus.
